Europäisches Patentamt

European Patent Office

Office européen des brevets

(19)

(11) Veröffentlichungsnummer: **0 215 187 B1**

(12) **EUROPÄISCHE PATENTSCHRIFT**

(45) Veröffentlichungstag der Patentschrift: 12.09.90

(51) Int. Cl.⁵: **G07F 7/02, G06K 19/06**

(21) Anmeldenummer: **86106057.2**

(22) Anmeldetag: **02.05.86**

(54) **Verfahren und Einrichtung zum Auswerten und Löschen von Wertmarkierungen auf Wertdokumenten.**

(30) Priorität: **21.08.85 CH 3594/85**

(43) Veröffentlichungstag der Anmeldung: **25.03.87 Patentblatt 87/13**

(45) Bekanntmachung des Hinweises auf die Patenterteilung: **12.09.90 Patentblatt 90/37**

(84) Benannte Vertragsstaaten: **AT BE CH DE FR GB IT LI NL SE**

(56) Entgegenhaltungen:
**CH-A- 607 799**
**FR-A- 2 463 457**
**GB-A- 2 099 756**
**US-A- 4 231 458**

(73) Patentinhaber: **Landis & Gyr Betriebs AG,** CH-6301 Zug(CH)

(72) Erfinder: **Niepolomski, Andrzej, Burgmatt 20,** **CH-6340 Baar(CH)**
Erfinder: **Greenaway, David, Stolzengrabenstrasse 59,** **CH-6317 Oberwil(CH)**

**Beschreibung**

Die Erfindung bezieht sich auf ein Verfahren und eine Einrichtung zum Auswerten und Löschen von Wertmarkierungen auf Wertdokumenten gemäss dem Oberbegriff des Anspruchs 1 bzw. des Anspruchs 7.

Ein Verfahren und eine Einrichtung zum Herstellen und Identifizieren von Wertdokumenten ist aus der CH-PS 594 935 bekannt, in der ausserdem in Spalte 4, Zeilen 19 bis 21, die Verwendung eines 2-aus-5-Code zur Darstellung von Zahlen erwähnt wird. Löschbare Wertmarkierungen sind z.B. aus FR-A 2 463 457 oder US-A 4 231 458 bekannt.

Der Erfindung liegt die Aufgabe zugrunde, die bekannten Verfahren und Einrichtungen zum maschinellen Auswerten von Wertdokumenten, deren Aufgabeschwerpunkt vor allem im Erkennen von Fälschungen liegt, derartig zu ändern und zu verbessern, dass Fälschungen noch besser erkannt und dass auch absichtliche oder unbeabsichtigte Fehlmanipulationen mit echten Wertdokumenten in Auswertegeräten verhindert werden können.

Als Wertdokumente kommen maschinenauswertbare Dokumente in Frage, deren Informationsträger maschinenlöschbar sind und die hauptsächlich der bargeldlosen Bezahlung von Waren oder Dienstleistungen dienen, wie z.B. Fahrkarten, Eintrittskarten, Guthabenkarten usw. Im letzten Fall besteht das Guthabenmittel oft aus einer Vielzahl gleichwertiger Werteinheiten, die zum Vorauszahlen von Dienstleistungen verwendet werden, wie z.B. zum Vorauszahlen eines Elektrizitäts-, eines Gas- oder eines Wasserverbrauchs oder zur Vorauszahlung eines Telephongesprächs aus einer öffentlichen Telephonstation. Bei der Inanspruchnahme der Dienstleistung werden dann die Werteinheiten, die aus codierten Daten bestehen, mit Hilfe eines Auswertegerätes gelesen und auf Echtheit sowie auf Wert geprüft, um anschliessend, der beanspruchten Dienstleistung entsprechend, ganz oder teilweise gelöscht zu werden. Bis heute wurde sehr viel Aufwand getrieben, z.B. durch Verwendung von Hologrammen, um Wertdokumente fälschungssicher zu machen. Da das Lesen und Entwerten von Wertmarkierungen bisher unabhängig voneinander erfolgte, war es relativ einfach, ein Wertdokument zu lesen, ohne es zu entwerten, indem die Löschoperation unterdrückt wurde durch irgendwelche Manipulationen beim Löschvorgang. Die Löschoperation kann z.B. verhindert werden durch Entfernen des Löschkopfes, durch Vorhandensein eines defekten Löschkopfes, durch schnelles Herausziehen des Werkdokumentes bevor der Löschvorgang begonnen hat oder durch Kurzschliessen des Löschvorganges, usw. Die Dienstleistung wird so kostenlos bezogen durch Mehrfachbenutzung des gleichen Wertdokumentes, was verhindert werden soll.

Die genannte Aufgabe wird erfindungsgemäss durch die im Kennzeichen des Anspruchs 1 bzw. des Anspruchs 7 angegebenen Merkmale gelöst.

Ausführungsbeispiele der Erfindung sind in der Zeichnung dargestellt und werden im folgenden näher beschrieben.

Es zeigen:

Fig. 1 ein Wertdokument mit optischen Wertmarkierungen,

Fig. 2 das Wertdokument gemäss der Fig. 1 mit zum Teil ausgelöschten Wertmarkierungen,

Fig. 3 und Fig. 4 Prinzipdarstellungen optischer Eingangsteile eines Auswertegerätes,

Fig. 5 eine weitere Variante eines Wertdokumentes,

Fig. 6 eine prinzipielle Darstellung einer Einrichtung zum Lesen und Löschen von Wertdokumenten,

Fig. 7 eine prinzipielle Darstellung einer Einrichtung gemäss der Fig. 6 mit einer ersten Codierungsvariante eines Wertdokumentes,

Fig. 8 eine zweite Codierungsvariante eines Wertdokumentes,

Fig. 9 ein Blockschaltbild eines Auswertegerätes,

Fig. 10 ein weiteres Blockschaltbild eines Auswertegerätes und

Fig. 11 ein Flussdiagramm zugehörig zu einem Auswertegerät, das einen Mikrocomputer enthält.

Gleiche Bezugszahlen bezeichnen in allen Figuren der Zeichnung gleiche Teile.

Zur Darstellung von Werteinheiten befindet sich auf jedem Wertdokument eine Vielzahl von Wertmarkierungen. Eine Anzahl Wertmarkierungen, z.B. acht Wertmarkierungen, bilden ein Codewort, das einen vorgegebenen Geldwert darstellt. Jede Wertmarkierung stellt einen Buchstaben des Codewortes dar und besitzt einen diskreten Wert aus einer vorgegebenen Menge diskreter Werte. Die Wertmarkierung kann z.B. ternärwertig sein und besitzt dann einen der drei diskreten Werte "0", "1" oder "2". Gebräuchlicher ist die Verwendung von binärwertigen Wertmarkierungen. Diese stellen dann die Bit eines binären Codewortes dar und besitzen dann einen der beiden diskreten Werte "0" oder "1". Bei einer Volldekodierung werden alle Wertmarkierungen des Codewortes ausgewertet und gelöscht, während bei einer Teildekodierung nur ein Teil dieser Wertmarkierungen ausgewertet und gelöscht wird. Die Verwendung einer Volldekodierung ist besser, da sicherer. Der Lieferant von Wertdokumenten ordnet jedem Kunde eigene, nur für diesen Kunde gültige Codewörter zu.

Im einfachsten Fall besteht jede Wertmarkierung auf einem Wertdokument aus einer Zelle eines Festwertspeichers, in der ein Bitwert "1" oder "0" gespeichert ist. Ein Löschen der Wertmarkierung erfolgt dann entweder durch Löschen des Informationsinhaltes "1" oder "0" der betreffenden Zelle oder sicherer durch eine vollständige Zerstörung der betreffenden Zelle. Der Festwertspeicher ist z.B. ein mechanischer, ein elektrischer, ein elekromagnetischer, ein magnetischer, ein optischer oder ein sonstiger Festwertspeicher. Ein elekrischer Festwertspeicher besteht z.B. aus einem Satz Schmelzsicherungen, einem Satz schmelzbarer Dioden oder einem Satz schmelzbarer Transistoren, der ein einmal programmierbares sogenanntes PROM ("programmable read only memory") bildet. Vorhandene Schmelzsicherungen, Dioden bzw. Transistoren stellen dann z.B. je einen Bitwert "1" dar, während fehlende Schmelzsicherungen, Dioden bzw. Transistoren dagegen z.B. je einen Bitwert "0" darstellen. Jedes dieser Bauelemente ist dann eine Zelle des Festwertspeichers. Das Löschen einer Zelle erfolgt in diesem Fall z.B. mit Hilfe eines Ueberstroms von z.B. 100 mA, der durch die betreffende Schmelzsicherung, die betreffende Diode bzw. den betreffenden Transistor gesandt wird, um diese bzw. diesen zu zerstören. Im Handel sind z.B. EAROM's ("electrically alterable only memories") oder EEPROM's ("electrically erasable programmable read only memories") erhältlich, deren Zellen allerdings in der Regel mehrfach programmierbar und, da mehrfachbenutzbar, von beschränkterer Sicherheit sind.

Alle diese elekrischen Festwertspeicher haben jedoch den Nachteil, dass, trotz Verwendung von zusätzlichen Echtheitsmarkierungen neben den bereits vorhandenen Wertmarkierungen und trotz Verwendung von komplizierten Codewörtern, die Fälschungssicherheit der mit solchen elektrischen Festwertspeichern ausgestatteten Wertdokumente relativ beschränkt ist.

Eine Gruppe von besonders fälschungssicheren Wert- und Echtheitsmarkierungen besteht z.B. aus einem optischen Festwertspeicher, dessen Zellen aus je einem Phasenhologramm, je einem Kinoform, je einem Phasenbeugungsgitter oder je einer aus Sägezahnfurchen bestehenden Phasenstruktur gebildet sind. Diese optischen Zellen stellen, unabhängig von ihrem Informationsinhalt "1" oder "0", selber Echtheitsmerkmale dar, so dass getrennte Echtheits- und Wertmarkierungen an sich nicht mehr nötig sind. Die Zellen dieser optischen Festwertspeicher sind dann in diesem Fall gleichzeitig Wert- und Echtheitsmerkmale. Die Fälschungssicherheit dieser optischen Festwertspeicher ergibt sich dadurch, dass es sehr schwierig und sehr teuer ist, solche Festwertspeicherzellen zu kopieren, und dass ein Fälscher zusätzliche, in der Regel nicht vorhandene Informationen und Kenntnisse benötigt, um die Fälschung durchzuführen.

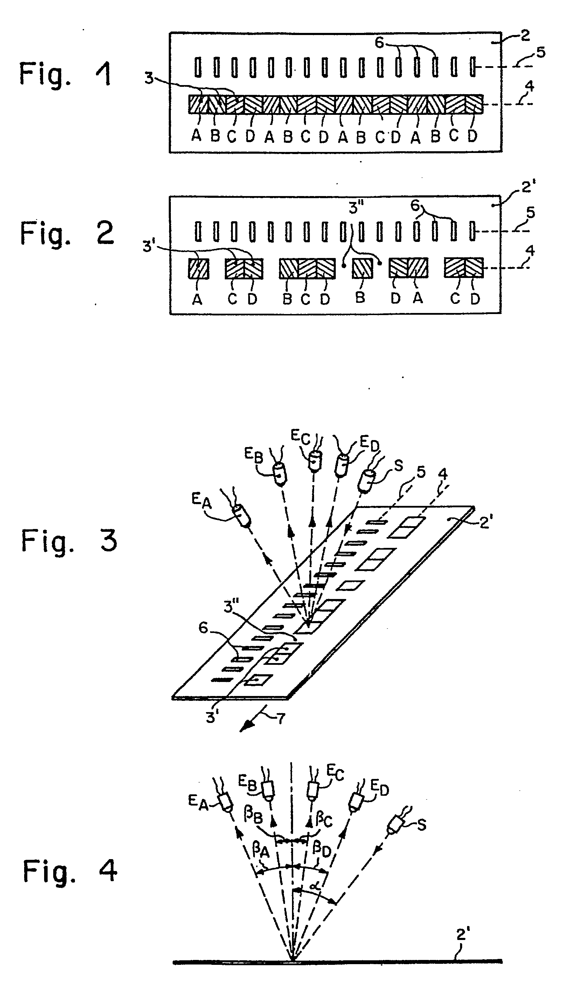

In der Fig. 1 ist ein Wertdokument 2 dargestellt, auf dem sich eine Vielzahl von maschinenlesbaren optischen Wertmarkierungen 3 befindet, von denen jede auf dem Wertdokument 2 eine Speicherzelle für ein Informationsbit belegt. Jede Wertmarkierung bewirkt eine vorbestimmte charakteristische Modifikation des Strahlenganges einer weiter unten beschriebenen optischen Prüfeinrichtung z.B. durch Beugung oder Brechung einer reflektierten oder transmittierten kohärenten Lichtstrahlung. Im dargestellten Beispiel sind vier verschiedene, in der Zeichnung durch unterschiedliche Schraffuren angedeutete Markierungsarten A, B, C und D auf dem Wertdokument 2 vorhanden, die jeweils eine unterschiedliche Modifikation einfallenden Lichtes hervorrufen. Im Beispiel der Fig. 1 liegen sämtliche Wertmarkierungen 3 - und zwar jeweils vier unterschiedliche Wertmarkierungen periodisch verschachtelt hintereinander - in der Konfiguration
ABCD ABCD ABCD ABCD
in einer Reihe, die eine Datenspur 4 darstellt. Parallel zur Datenspur 4 befindet sich eine Taktspur 5, die vorzugsweise optische Taktmarkierungen 6 enthält. Jede Gruppe von vier aufeinanderfolgenden Bit A, B, C und D bilden z.B. ein nicht reduziertes Codewort, das hier zeitseriell gelesen werden muss.

Gemäss der Fig. 2 wird eine kodierte Information in das in der Fig. 2 mit 2' bezeichnete Wertdokument eingegeben, indem ausgewählte Wertmarkierungen 3" wieder ausgelöscht werden. Mit dem Begriff "Auslöschen" soll hier gemeint sein, dass die Wertmarkierungen 3" entweder vollständig zum Verschwinden gebracht oder so verändert werden, dass sie nicht mehr die gleiche charakteristische Modifikation einfallenden Lichtes hervorrufen wie die verbleibenden Wertmarkierungen 3'. Das Auslöschen der Wertmarkierungen 3" kann z.B. durch thermische, chemische oder mechanische Einwirkung erfolgen. Der hierbei angewandte Code wird vorteilhaft so gewählt, dass durch unbefugtes Auslöschen weiterer Wertmarkierungen 3' die kodierte Information nicht in sinnvoller Weise verändert werden kann. Im dargestellten Beispiel sind die verbleibenden Wertmarkierungen 3' in der Konfiguration
A-CD-BCD-B-DA-CD
angeordnet, wobei "-" einen durch das Auslöschen einer Wertmarkierung 3" entstehenden Zwischenraum bedeutet.

Ordnet man einer ausgelöschten Wertmarkierung A, B, C oder D eine Bezeichnung $\overline{A}$, $\overline{B}$, $\overline{C}$ bzw. $\overline{D}$ zu, so ist in der Datenspur 4 das Wort
$A\overline{B}C\overline{D}\overline{A}BCD\overline{A}B\overline{C}\overline{D}AB\overline{C}D$
gespeichert. Dieses Wort kann z.B. als Echtheits-Codewort verwendet werden. In diesem Fall wird in einem Speicher des Auswertegerätes eine Information über die Konfiguration, in welcher die unterschiedlichen Markierungsarten A, B, C und D auf dem Wertdokument 2' angeordnet wurden, eingespeichert. Beim Identifizieren des Wertdokumentes 2' wird im Auswertegerät geprüft, ob die Konfiguration der auf dem Wertdokument 2' verbleibenden Wertmarkierungen 3' mit der gespeicherten Konfiguration übereinstimmt. Bei Uebereinstimmung wird das Wertdokument 2' als echt und anlagenzugehörig betrachtet, bei Nichtübereinstimmung dagegen wird das Wertdokument 2' zurückgewiesen.

Anhand der Figuren 3 bis 4 wird im folgenden ein Ausführungsbeispiel des Eingangsteils eines Auswertegerätes für Wertdokumente 2' beschrieben, deren Wertmarkierungen 3' reflektierende Phasenbeugungsgitter sind. Als Beispiel sei angenommen, dass die Linien dieser Beugungsgitter senkrecht zur Richtung der Datenspur 4 orientiert sind und dass sich die einzelnen Arten A, B, C und D dieser Beugungsgitter durch ihre Liniendichte N unterscheiden. In einer zu den Linien der Beugungsgitter sowie zur Oberfläche des Wertdokumentes 2' senkrechten Ebene sind eine Lichtquelle S und vier Lichtempfänger $E_A$, $E_B$, $E_C$ und $E_D$ angeordnet (siehe Fig. 3 und Fig. 4). Die Lichtquelle S sendet einen Lichtstrahl aus, der durch eine in der Zeichnung nicht dargestellte Maske auf das Wertdokument 2' fällt und dort einen den äusseren Abmessungen der Wertmarkierungen 3' bzw. 3" entsprechenden Bereich der Datenspur 4 ausleuchtet. Das Wertdokument 2' wird in Richtung eines Pfeiles 7 bewegt und hierbei seriell ausgelesen. Der unter einem Einfallswinkel $\alpha$ auf das Wertdokument 2' einfallende Lichtstrahl mit einer im sichtbaren oder unsichtbaren Wellenlängenbereich liegenden Wellenlänge $\lambda$ wird, wenn er auf eine Wertmarkierung 3' fällt, an dieser in die einzelnen Beugungsordnungen zerlegt. Für den Ausfallswinkel $\beta$ eines an der Wertmarkierung 3' in die energiereiche erste Beugungsordnung reflektierten Teilstrahls gilt die Beziehung

$\sin \beta = N \cdot \lambda - \sin \alpha$.

Die Lichtempfänger $E_A$ bis $E_D$ sind in den nach dieser Beziehung festgelegten Raumwinkeln $\beta_A$, $\beta_B$, $\beta_C$ und $\beta_D$ positioniert. Bei der optischen Abtastung einer Wertmarkierung 3' der Art A wird also der Lichtempfänger $E_A$ erregt, bei der Abtastung einer Wertmarkierung 3' der Art B empfängt der Lichtempfänger $E_B$ ein Signal usw. Weist dagegen ein jeweils abgefragter Bereich des Dokumentes 2' keine Wertmarkierung 3' der Art A, B, C oder D auf, so empfängt keiner der Lichtempfänger $E_A$ bis $E_D$ ein Signal, das zur Erregung der an die Lichtempfänger angeschlossenen Schaltkreise genügend stark ist. Mit mindestens einem nicht gezeichneten, beispielsweise in der nullten Beugungsordnung der genannten Beugungsgitter angeordneten Lichtempfänger kann zusätzlich auch die Abwesenheit einer Wertmarkierung 3' nachgewiesen werden.

Es können auch alle Wertmarkierungen 3 der gleichen Art sein, z.B. Wertmarkierungen der Art A. In diesem Fall ist das Codewort weniger fälschungssicher, seine Auswertung benötigt jedoch statt der vier Lichtempfänger $E_A$, $E_B$, $E_C$ und $E_D$ nur mehr einen Lichtempfänger $E_A$.

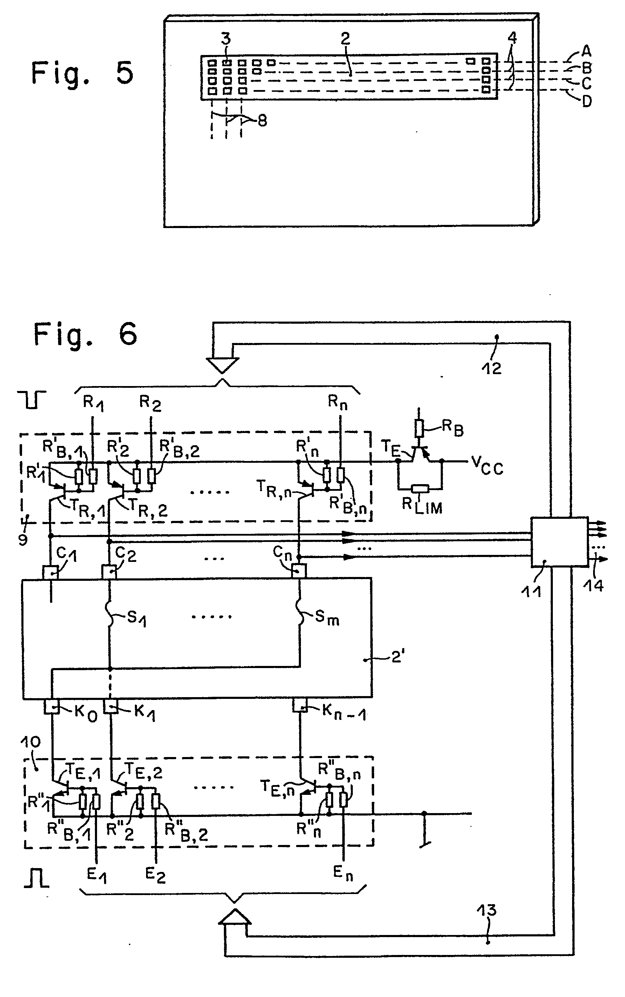

Die in der Figur 1 verwendeten Codewörter ABCD haben die Eigenschaft, dass ihre Bitwerte zeitseriell gelesen werden müssen. Wird die einzige Datenspur 4 der Fig. 1 durch vier parallele Datenspuren ersetzt, nämlich einer Datenspur A, einer Datenspur B, einer Datenspur C und einer Datenspur D, wie in der Fig. 5 dargestellt, dann können alle vier Wertmarkierungen A, B, C und D eines Codewortes ABCD parallel gleichzeitig gelesen und ausgewertet werden. In der Fig. 5 stellt z.B. jede Kolonne 8 von vier gleichzeitig gelesenen Wertmarkierungen 3 ein Vier-Bit-Codewort ABCD dar, wobei die einzelnen Kolonnen 8 und damit auch die einzelnen Codewörter ABCD zeitlich nacheinander abgefragt und ausgewertet werden. In der Praxis besitzt ein Codewort allerdings nicht nur vier, sondern n Stellen, wobei n ganzzahlig ist.

Nachfolgend gilt die Annahme, dass entweder alle n Stellen des Codewortes oder nur ein Teil dieser n Stellen, nämlich m Stellen des Codewortes, ausgewertet und gelöscht werden. Im letzten Fall bleiben die restlichen (n-m) Stellen des Codewortes unbeachtet. Im ersten Fall sind die Anzahl Wertmarkierungen des ursprünglichen Codewortes und die Anzahl ausgewerteter vorgegebener Wertmarkierungen gleich gross.

Nachfolgend erfolgt die Auswertung und Entwertung des Wertdokumentes schrittweise folgendermassen:

- In einem ersten Verfahrensschritt, auch Erkennungsschritt genannt, wird mit Hilfe einer ersten Decodierung kontrolliert, ob alle n bzw. m vorgegebenen Wertmarkierungen vorhanden und echt sind. Der Empfänger $E_A$ z.B. (siehe Fig. 3 und 4) empfängt nur ein Signal, das in einem bestimmten, ihm zugeordneten Toleranzband liegt, wenn die ausgewertete Wertmarkierung eine echte Wertmarkierung der Art A ist. Ausserdem müssen zu Beginn der Auswertung, d.h. während des ersten Verfahrensschrittes, alle vorgegebenen Wertmarkierungen vorhanden sein. Sind diese Bedingungen alle erfüllt, und nur dann, werden die nachfolgenden Verfahrensschritte, die mit einem Löschschritt beginnen, freigegeben, ansonsten wird die Auswerteeinrichtung ohne Löschung von Wertmarkierungen gesperrt. Letzteres ist nötig, da ansonsten ein korrektes Wertdokument, das irrtümlicherweise in ein falsches Auswertegerät gesteckt wird, ungerechterweise entwertet würde. Die Freigabe bzw. die Sperrung der weiteren Auswertung wird z.B. mit einer Signallampe angezeigt, damit der Benutzer weiss, ob das Wertdokument von der Auswerteeinrichtung akzeptiert wurde oder nicht.

- Nach der Freigabe folgen dem ersten Verfahrensschritt noch mindestens zwei zeitlich aufeinanderfolgende Löschschritte als Verfahrensschritte, während denen je ein Teil der vorgegebenen Wertmarkierungen gelöscht wird. Der Teil der vorgegebenen Wertmarkierungen, der während eines Löschschrittes gelöscht wird, wird mitbestimmt durch Informationen, die auf dem Wertdokument 2' vorhanden sind. Diese Informationen können entweder räumliche Anordnungen und Reihenfolgen von Wertmarkierungen auf dem Wertdokument 2' oder aber Verbindungen zwischen Wertmarkierungen auf dem Wertdokument 2' sein. In mindestens einem Löschschritt werden z.B. mindestens zwei Wertmarkierungen gelöscht. Es werden soviele Löschschritte benötigt, bis nach dem letzten Löschschritt alle vorgegebenen Wertmarkierungen gelöscht sind. Die Summe der Wertmarkierungen, die während der Gesamtheit aller Löschschritte gelöscht werden, ist demnach gleich n bzw. gleich m.

Beispiel: Mit m = 4 erfolgt die Löschung von m = 4 vorgegebenen Wertmarkierungen z.B. in drei Löschschritten, wobei z.B., in der angegebenen Reihenfolge, während des ersten Löschschrittes eine ganz bestimmte Wertmarkierung, während des zweiten Löschschrittes zwei bestimmte andere Wertmarkierungen und während des dritten Löschschrittes die verbleibende vierte Wertmarkierung gelöscht werden.

Eine Wertmarkierung gilt nur dann als gelöscht, wenn das gelesene, von ihr verursachte Signal in einem ganz bestimmten, der gelöschten Wertmarkierung zugeordneten Toleranzgebiet liegt.

- Jedem Löschschritt ist je ein Kontrollschritt zugeordnet, in dem mit Hilfe je einer weiteren Decodierung kontrolliert wird, ob am Ende des zugehörigen Löschschrittes die gelöschten und die nichtgelöschten vorgegebenen Wertmarkierungen je ein vorgegebenes weiteres Codewort bilden, wobei den nichtgelöschten Wertmarkierungen und den gelöschten Wertmarkierungen unterschiedliche Werte zugeordnet werden. Da nach dem letzten Löschschritt korrekterweise alle n bzw. m vorgegebenen Wertmarkierungen gelöscht sein müssen, kontrolliert der letzte Kontrollschritt das ausschliessliche Vorhandensein von gelöschten Wertmarkierungen.

- Nach dem letzten Kontrollschritt wird ein Freigabesignal, das dem vorgegebenen Geldwert des ursprünglichen Codewortes entspricht, nur dann erzeugt, wenn nach allen Löschschritten in der richtigen Reihenfolge die vorgegebenen weiteren Codewörter vorhanden waren, wobei jedem Geldwert eine ganz bestimmte vorgegebene Reihenfolge dieser vorgegebenen weiteren Codewörter entspricht.

Der zusätzliche Schutz gegen Fehlmanipulationen entsteht dadurch, dass nicht das auf dem Wertdokument vorhandene Codewort direkt zur Erzeugung eines Freigabesignals verwendet wird, sondern dass die in einer ganz bestimmten Reihenfolge gelöschten vorgegebenen Wertmarkierungen der Erzeugung eines Freigabesignals dienen. Das Löschen ist somit ein Teil der Decodierungsoperation. Die im ursprünglichen Codewort vorhandene Information wird nur nach einer ganzen Reihe von Löschungen gelesen mit Echtheitskontrollen nach jedem Löschschritt. Eine missbräuchliche Verhinderung einer Entwertung verhindert somit auch automatisch die Erzeugung eines Freigabesignals und damit die Freigabe der gewünschten Dienstleistung. Dadurch entsteht eine Art interne Rückkopplung, da ein einmal akzeptierter Speicherzelleninhalt bereits vor der Akzeptierung gelöscht wird und er somit mit Sicherheit, in einem weiteren Durchlauf des Wertdokumentes, nicht noch einmal die Prüfung im ersten Verfahrensschritt mit positivem Ergebnis durchlaufen kann, da während des Erkennungsschrittes noch keine Bit des reduzierten Codewortes gelöscht sein dürfen. Einmal akzeptierte Bargeldwerte sind daher bereits vor ihrer Akzeptierung gelöscht und können nicht noch einmal zu einem Zahlungszweck verwendet werden.

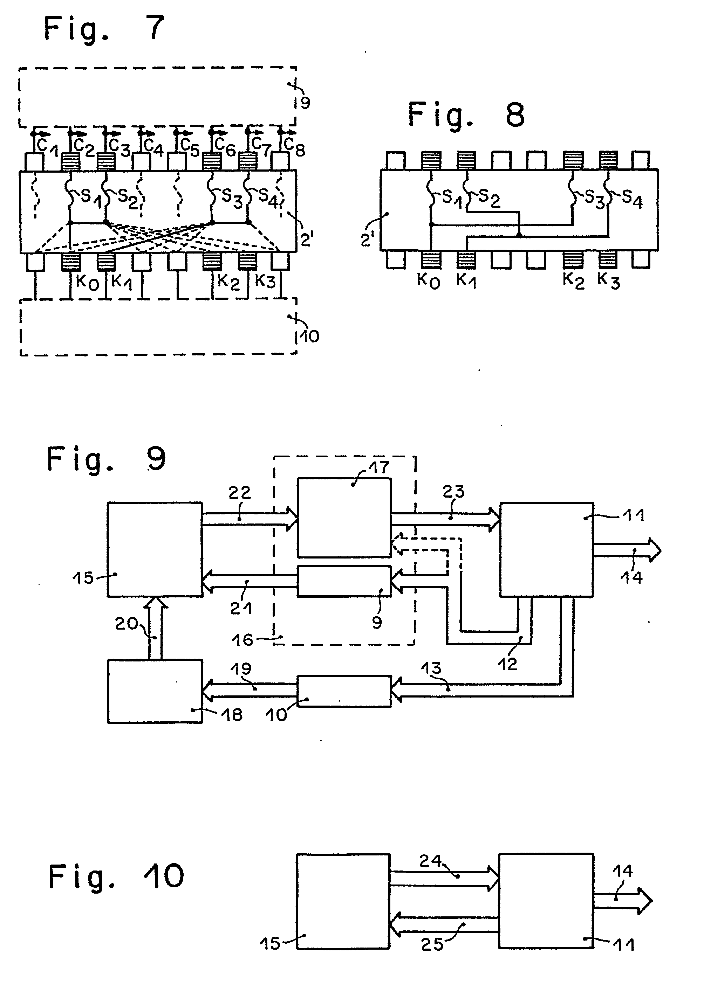

Das Verfahren soll nachfolgend noch an einem äusserst einfachen, in den Figuren 6 bis 8 dargestellten Beispiel näher erläutert werden. In den Figuren 6 und 7 ist jeweils eine einfache Einrichtung zum Lesen und Löschen von Wertmarkierungen auf Wertdokumenten mit einem dazugehörigen Wertdokument 2' prinzipiell dargestellt. In der Fig. 8 ist nur ein Wertdokument 2' wiedergegeben. In den Darstellungen aller drei Figuren 6 bis 8 bestehen die Festwertspeicherzellen, die als vorgegebene Wertmarkierungen auf dem Wertdokument 2' aufgetragen sind, einfachshalber aus je einer Schmelzsicherung $S_1$ bis $S_m$, wobei in den Figuren 7 und 8 m = 4. Es gilt die Annahme, dass der Festwertspeicher aus maximal n Speicherzellen $C_1$ bis $C_n$ bestehen kann, mit n = 8 in den Figuren 7 und 8. In diesen letzten beiden Figuren sind somit nur m = 4 Schmelzsicherungen $S_1$ bis $S_4$ vorhanden, wobei die folgende Zuordnung angenommen wird:
$(S_1, S_2, S_3, S_4) \Leftrightarrow (C_2, C_3, C_6, C_7)$,
oder mit anderen Worten: $S_1$ entspricht der Schmelzsicherung $C_2$, $S_2$ der Schmelzsicherung $C_3$, $S_3$ der Schmelzsicherung $C_6$ und $S_4$ der Schmelzsicherung $C_7$.

Ist eine Schmelzsicherung $S_1$ bis $S_m$ vorhanden, dann hat das zugehörige Bit z.B. einen Binärwert "1", bei Abwesenheit einer dieser Schmelzsicherungen dagegen hat es einen Binärwert "0". Das Vorhandensein oder die Abwesenheit von Schmelzsicherungen $S_1$ bis $S_m$ auf dem Wertdokument 2' wird jeweils mit Hilfe eines Lesetreibers 9 ermittelt, der in der Auswerteeinrichtung enthalten ist. Fliesst ein vom Lesetreiber 9 gelieferter Strom von z.B. 1 mA durch eine Schmelzsicherung, was z.B. mit Hilfe einer nicht dargestellten Spannungsmessung ermittelt wird, dann gilt die betreffende Schmelzsicherung als vorhanden. In der Einrichtung ist ausserdem noch ein Löchtreiber 10 anwesend. Fliesst ein vom Löschtreiber 10 gelieferter Strom von z.B. 100 mA durch Schmelzsicherungen, so werden diese zerstört und die zugehörige Information somit gelöscht. Der Lesetreiber 9 und der Löschtreiber 10 bestehen z.B., wie in der Fig. 6 dargestellt, aus je n bipolaren Transistoren $T_{R,1}$ bis $T_{R,n}$ bzw. $T_{E,1}$ bis $T_{E,n}$, wobei der Index R lesen ("Read") und der Index E löschen ("Erase") bedeutet. Die n Transistoren des einen Treibers sind z.B. NPN-Transistoren und die des anderen Treibers PNP-Transistoren. In der Fig. 6 besitzt das Wertdokument 2' oben n Anschlüsse, die mit den, in der Darstellung der Fig. 6, oberen Anschlüssen der n maximal vorhandenen Schmelzsicherungen $C_1$ bis $C_n$ verbunden sind, und unten n Anschlüsse $K_0$ bis $K_{n-1}$, die teilweise auf die unteren Anschlüsse der n maximal zulässigen Schmelzsicherungen $C_1$ bis $C_n$ geführt sind. Die n oberen Anschlüsse des Wertdokumentes 2' sind z.B. mit dem Kollektor je eines der Transistoren $T_{R,1}$ bis $T_{R,n}$ und mit je einem Eingang einer Kontroll- und Entscheidungseinheit 11 verbunden. Ein Pol $V_{CC}$ einer Speisespannung, deren anderer Pol z.B. an Masse liegt, ist über eine Parallelschaltung eines Begrenzungs-Widerstandes $R_{Lim}$ und der Emitter-Kollektor-Strecke eines weiteren bipolaren Transistors $T_E$ auf die miteinander verbundenen Emitter aller Transistoren $T_{R,1}$ bis $T_{R,n}$ des Lesetreibers 9 geführt, während alle Emitter der Transistoren $T_{E,1}$ bis $T_{E,n}$ des Löschtreibers 10 an Masse liegen. Die n unteren Anschlüsse $K_0$ bis $K_{n-1}$ des Wertdokumentes 2' sind mit dem Kollektor je eines der Transistoren $T_{E,1}$ bis $T_{E,n}$ verbunden. Die in der Fig. 6 dargestellte Schaltung besitzt n Leseeingänge $R_1$ bis $R_n$ und n Löscheingänge $E_1$ bis $E_n$, die über je einen Spannungsteiler $R'_{B,1}$; $R'_1$ bis $R'_{B,n}$; $R'_n$ bzw. $R''_{B,1}$; $R''_1$ bis $R''_{B,n}$; $R''_n$ mit der Basis je eines Transistors $T_{R,1}$ bis $T_{R,n}$ des Lesetreibers 9 bzw. $T_{E,1}$ bis $T_{E,n}$ des Löschtreibers 10 verbunden sind. Jeder Spannungsteiler $R'_{B,1}$; $R'_1$ bis $R'_{B,n}$; $R'_n$ bzw. $R''_{B,1}$; $R''_1$ bis $R''_{B,n}$; $R''_n$ besteht aus je zwei Widerständen $R'_{B,1}$ und $R'_1$, ..., $R'_{B,n}$ und $R'_n$ bzw. $R''_{B,1}$ und $R''_1$, ..., $R''_{B,n}$ und $R''_n$, deren gemeinsamer Pol jeweils auf die Basis des zugehörigen bipolaren Transistors geführt ist, während der andere Pol der Widerstände $R'_1$ bis $R'_n$ jeweils mit den Emittern der Transistoren $T_{R,1}$ bis $T_{R,n}$ verbunden ist und der andere Pol der Widerstände $R''_1$ bis $R''_n$ jeweils an Masse liegt. Die Basis des weiteren Transistors $T_E$ wird über einen Basiswiderstand $R_B$ angesteuert. In der Darstellung der Fig. 6 werden die Leseeingänge $R_1$ bis $R_n$ mit negativen Impulsen und die Löscheingänge $E_1$ bis $E_n$ mit positiven Impulsen gesteuert. Ein erster n-Bit-Ausgang der Kontroll- und Entscheidungseinheit 11 ist über eine erste Busverbindung 12 mit den n Leseeingängen $R_1$ bis $R_n$ und ein zweiter n-Bit-Ausgang der Kontroll- und Entscheidungseinheit 11 ist über eine zweite Busverbindung 13 mit den n Löscheingängen $E_1$ bis $E_n$ der Einrichtung verbunden. Die Kontroll- und Entscheidungseinheit 11 besitzt ausserdem noch einen weiteren Busausgang 14.

Die n oberen Anschlüsse der Werkdokumentes 2' sind in Abhängigkeit von einer gewählten Zuordnung
$$(S_1, S_2, S_3, ..., S_m) \Leftrightarrow (C_x, C_y, C_z, ... C_w)$$
mit den oberen Polen der vorhandenen Schmelzsicherungen $S_1$ bis $S_m$ verbunden, während die n unteren Anschlüsse $K_0$ bis $K_{n-1}$ des Wertdokumentes 2' ebenfalls in Abhängigkeit von dieser Zuordnung und in Abhängigkeit von der gewählten Löschsequenz mit unteren Polen der vorhanden Schmelzsicherungen $S_1$ bis $S_m$ verbunden sind.

Zum Lesen sind z.B. alle Transistoren $T_{E,1}$ bis $T_{E,n}$ des Löschtreibers 10 leitend und die Transistoren $T_{R,1}$ bis $T_{R,n}$ des Lesetreibers 9 werden entweder alle gleichzeitig oder zeitlich nacheinander leitend gemacht, während der Transistor $T_E$ nicht leitend ist. Der dann fliessende Strom wird durch den Begrenzungs-Widerstand $R_{Lim}$ auf z.B. 1 mA begrenzt, der keine Schmelzsicherung $S_1$ bis $S_m$ zerstören kann. An den Eingängen der Kontroll- und Entscheidungseinheit 11 erscheinen dann entweder gleichzeitig oder zeitlich nacheinander die Binärwerte der einzelnen Bit des Codewortes. Zum Löschen sind z.B. alle Transistoren $T_{R,1}$ bis $T_{R,n}$ des Lesetreibers 9 leitend und die Transistoren $T_{E,1}$ bis $T_{E,n}$ des Löschtreibers 10 werden zeitlich nacheinander leitend gemacht, während der Transistor $T_E$ diesmal leitend ist und den Begrenzungs-Widerstand $R_{Lim}$ kurzschliesst.

Die Fig. 7 ist eine vereinfachte Darstellung der Fig. 6. Für die Figuren 7 und 8 gilt:

Das ursprüngliche, aus n = 8 Bit bestehende Codewort ist:
$$C_1 C_2 C_3 C_4 C_5 C_6 C_7 C_8,$$
wobei $C_1$ bis $C_8$ nur Binärwerte besitzen.

Ein aus m = 4 vorgegebenen Bit bestehendes ausgewertes Codewort ist:
$$S_1 S_2 S_3 S_4.$$

Zwischen den beiden Codewörtern gilt in den beiden Figuren 7 und 8 die Zuordnung.
$$(S_1, S_2, S_3, S_4) \Leftrightarrow (C_2, C_3, C_6, C_7),$$
d.h. $S_1 = C_2$, $S_2 = C_3$, $S_3 = C_6$ und $S_4 = C_7$. Diese Zuordnung ist in den Figuren 7 und 8 dadurch realisiert, dass die oberen Pole der Schmelzsicherungen $S_1$ bis $S_4$ mit je einem schraffiert dargestellten, jeweils zu $C_2$, $C_3$, $C_6$ und $C_7$ gehörenden, oberen Anschluss des Wertdokumentes 2' verbunden sind.

Es gilt die Annahme, dass für die beiden Figuren 7 und 8 eine gleiche Löschsequenz verwendet wird, z.B. dass in beiden Fällen während eines jeden Löschschrittes je eine Doppellöschung erfolgt. Nach total zwei Löschschritten sind somit alle m = 4 vorgegebenen Wertmarkierungen gelöscht. Die Löschsequenz ist in den Wertdokumenten 2' jeweils dadurch einprogrammiert, dass die unteren Pole der vier Schmelzsicherungen $S_1$ bis $S_4$ zwei zu zwei intern auf dem Wertdokument 2' miteinander verbunden sind. Diese internen Verbindungen entsprechen den bereits erwähnten, auf dem Wertdokument 2' vorhandenen Informationen, die mitbestimmen, welcher Teil der vorgegebenen Wertmarkierungen während eines Löschschrittes gelöscht wird. In der Fig. 7 sind z.B. die unteren Pole von $S_1$ und $S_2$ einerseits und von $S_3$ und $S_4$ anderseits miteinander verbunden.

Mit Hilfe der gleichen Löschsequenz können die m = 4 vorgegebenen Bit in verschiedenen, z.B. vorgegebenen Reihenfolgen gelöscht werden, wobei jeder dieser Reihenfolgen ein bestimmter Bargeldwert zugeordnet wird. Beispielsweise entspricht einem ersten Bargeldwert, z.B 0,1 \$, die Reihenfolge
$$S_1 S_2 S_3 S_4, \ \bar{S}_1 \bar{S}_2 S_3 S_4 \text{ und } \bar{S}_1 \bar{S}_2 \bar{S}_3 \bar{S}_4,$$
einem zweiten Bargeldwert, z.B. 0,5 \$, die Reihenfolge
$$S_1 S_2 S_3 S_4, \ \bar{S}_1 S_2 \bar{S}_3 S_4 \text{ und } \bar{S}_1 \bar{S}_2 \bar{S}_3 \bar{S}_4,$$
und einem dritten Bargeldwert, z.B. 1 \$, die Reihenfolge
$$S_1 S_2 S_3 S_4, \ \bar{S}_1 S_2 S_3 \bar{S}_4 \text{ und } \bar{S}_1 \bar{S}_2 \bar{S}_3 \bar{S}_4,$$
wobei die drei Kombinationen innerhalb einer Reihenfolge jeweils die nach dem ersten Verfahrensschritt, dem ersten Löschschritt und dem zweiten Löschschritt vorhandenen weiteren Codeworte darstellen. $\bar{S}_1$, $\bar{S}_2$, $\bar{S}_3$ und $\bar{S}_4$ stellen dabei jeweils die gelöschten Bit, d.h. die zerstörten Schmelzsicherungen dar. Wie leicht ersichtlich ist, ist nach dem ersten Verfahrensschritt immer die Kombination $S_1 S_2 S_3 S_4$ und nach dem letzten Löschschritt immer die Kombination $\bar{S}_1 \bar{S}_2 \bar{S}_3 \bar{S}_4$ vorhanden. Im Wertdokument 2' der Fig. 7 ist der erste Bargeldwert gespeichert, da zuerst die beiden Schmelzsicherungen $S_1$ und $S_2$ und dann die beiden anderen Schmelzsicherungen $S_3$ und $S_4$ zerstört werden. Im Wertdokument 2' der Fig. 8 ist dagegen der zweite Bargeldwert gespeichert, da zuerst die beiden Schmelzsicherungen $S_1$ und $S_3$ und dann die beiden anderen Schmelzsicherungen $S_2$ und $S_4$ zerstört werden. Dies ist bedingt durch die Tatsache, dass in der Fig. 8 einerseits die untere Pole der Schmelzsicherungen $S_1$ und $S_3$ und anderseits die unteren Pole der Schmelzsicherungen $S_2$ und $S_4$ miteinander verbunden sind.

Beim Durchlaufen der Verfahrensschritte werden, beim ersten Löschschritt und beim unteren Anschluss $K_0$ des Wertdokumentes 2' beginnend (siehe Figuren 7 und 8), die unteren Anschlüsse $K_0$, $K_1$, $K_2$ und $K_3$ des Wertdokuments 2' in der angegebenen Reihenfolge z.B. zeitlich nacheinander derart aktiviert, dass zuerst die mit $K_0$, dann die mit $K_1$, dann die mit $K_2$ und schliesslich die mit $K_3$ verbundenen Schmelzsicherungen $S_1$ bis $S_4$ zerstört werden. Die Art der Aktivierung der Ausgänge $K_0$ bis $K_3$ wird am besten im engen Zusammenhang mit der Art der verwendeten Löschsequenz derart realisiert, dass die Anzahl Löschschritte gleich der Anzahl Weiterschaltungsschritte der Ausgänge $K_0$ bis

höchstens $K_3$ ist, wenn diese Ausgänge von $K_0$ bis höchstens $K_{n-1} = K_3$ durchlaufen werden.

Mit m = 4 gibt es neben der erwähnten Löschsequenz mit zwei Doppellöschungen noch eine Löschsequenz mit vier Einzellöschungen, eine Löschsequenz mit zwei Einzel- und eine Doppellöschung und eine Löschsequenz mit einer Einzel- und einer Dreifachlöschung. Jede dieser Löschsequenzen kann einem anderen Kundenkreis zugeordnet werden. Ein Kunde-Code ist somit ein Doppelcode und gekennzeichnet
- einerseits durch die Zuordnung von m bestimmten aus n vorhandenen möglichen Wertmarkierungen und
- anderseits durch die Zuordnung einer ganz bestimmten Löschsequenz aus einer Vielzahl von möglichen Löschsequenzen.

Diese beiden Codeanteile sind gleich wichtig und gleich notwendig zur Erzielung einer grossen Fälschungs- und Fehlmanipulationssicherheit sowie zur Erzielung einer grossen Vielfalt von Kombinationen. Der obenerwähnte erste Codeanteil des Doppelcodes wird im ersten Verfahrensschritt, im sogenannten Erkennungsschritt geprüft, während der zweite Codeanteil jeweils nach den einzelnen Löschschritten geprüft wird. Der Bargeldwert des ursprünglichen Codewortes ist dann für einen bestimmten Kunden gegeben durch die Reihenfolge, in der die für den Kunden vorgegebene Anzahl Löschungen stattfindet, so dass der Kunde Wertdokumente unterschiedlichen Wertes besitzen kann.

Der Busausgang 14 der Kontroll- und Entscheidungseinheit 11 (siehe Fig. 6) besteht aus einer Vielzahl von Ausgängen. An einem vorgegebenen dieser Ausgänge erscheint z.B. ein Binärwert "1", wenn auf dem Wertdokument 2' ein ganz bestimmter vorgegebener Bargeldwert, z.B. der Bargeldwert 1, vorhanden ist. Ein Binärwert "1" an einem anderen dieser Ausgänge stellt dann das Vorhandensein eines anderen Bargeldwertes dar. Einem dieser Ausgänge ist ausserdem z.B. die Information "Wertdokument wurde nicht akzeptiert" zugeordnet, die entsteht, wenn in einem Verfahrensschritt das Vorhandensein eines falschen Codewortes festgestellt wird.

Die Kontroll- und Entscheidungseinheit 11 dient zum zeitlichen Steuern der verschiedenen Verfahrensschritte, zur Entscheidungsfindung, ob die nach dem ersten Verfahrensschritt und nach jedem Löschschritt anstehenden Codewörter korrekt sind und ob ihre Reihenfolge einem vorgegebenen Geldwert entspricht, und zur Erzeugung mindestens eines Freigabesignals, falls dies der Fall ist.

Die in der Fig. 6 dargestellte einfache Einrichtung ist für Wertdokumente mit sehr einfachen elektrischen Festwertspeichern geeignet. Beim Vorhandensein eines komplexeren Festwertspeichers, wie z.B. eines optischen Festwertspeichers, muss die in der Fig. 6 dargestellte Einrichtung erweitert werden zu der in der Fig. 9 dargestellten Einrichtung. In der Fig. 9 bezeichnet die Zahl 15 einen auf einem Wertdokument 2' befindlichen Festwertspeicher. Die in der Fig. 9 dargestellte Einrichtung enthält zusätzlich zu der in der Fig. 6 dargestellten Einrichtung

noch einen Lesekopf 16, der aus dem Lesetreiber 9 und einer Anpassungsschaltung 17 besteht, und einen Löschkopf 18. Die Anpassungsschaltung 17 besitzt Sensoren und Verstärker, z.B. zur Umwandlung der optischen Messsignale in elektrische Signale. Ein erster Ausgang der Kontroll- und Entscheidungseinheit 11 ist über die Busverbindung 12 mindestens mit dem Steuereingang des Lesetreibers 9, oft aber auch noch mit einem Steuereingang der Anpassungseinheit 17 verbunden, während ein zweiter Ausgang der Kontroll- und Entscheidungseinheit 11 über die Busverbindung 13, den Löschtreiber 10 und eine Busverbindung 19 auf den Steuereingang des Löschkopfes 18 geführt ist, dessen Ausgang mit den Löscheingängen des Festwertspeichers 15 über eine Busverbindung 20 verbunden ist. Der Ausgang des Lesetreibers 9 ist über eine Busverbindung 21 auf die Leseeingänge des Festwertspeichers 15 geführt, während dessen Ausgänge über eine Busverbindung 22 mit dem Dateneingang der Anpassungsschaltung 17 verbunden sind, deren Messausgänge ihrerseits über eine Busverbindung 23 auf die Eingänge der Kontroll- und Entscheidungseinheit 11 geführt sind. Die Arbeitsweise der in der Fig. 9 dargestellten Einrichtung ist prinzipiell gleich derjenigen der in der Fig. 6 dargestellten Einrichtung.

Oft können alle oder ein Teil der Funktionen des Lesekopfes 16, des Löschkopfes 18 und des Löschtreibers 10 innerhalb des Festwertspeichers 15 und/oder innerhalb der Kontroll- und Entscheidungseinheit 11 realisiert werden. In diesem Fall reduziert sich die in der Fig. 9 dargestellte Schaltung auf die in der Fig. 10 wiedergegebene minimale Schaltung, die nur mehr aus dem Festwertspeicher 15 und der Kontroll- und Entscheidungseinheit 11 besteht, die beide über einen Datenbus 24 und einen Steuerbus 25 miteinander verbunden sind.

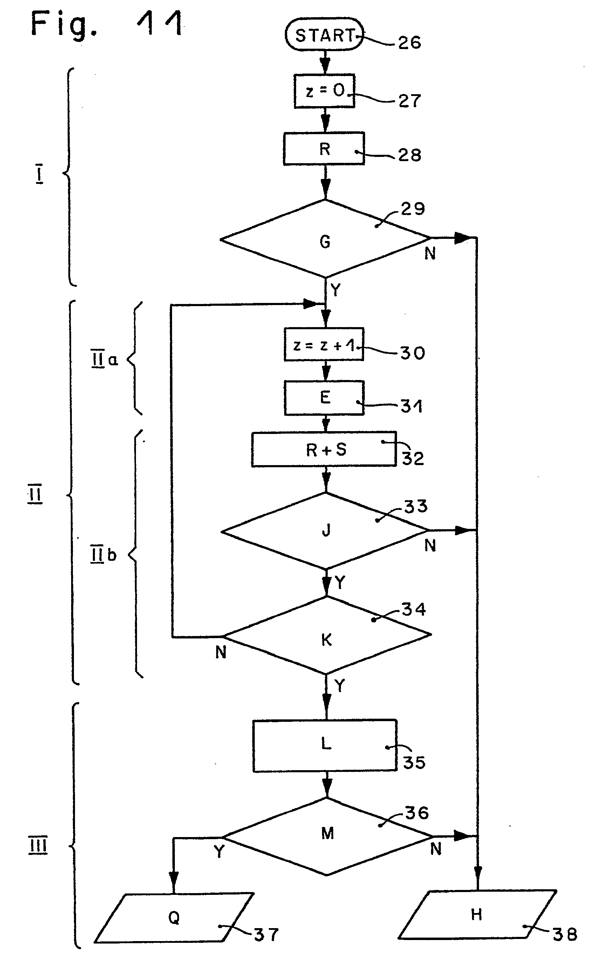

Als Kontroll- und Entscheidungseinheit 11 wird vorzugsweise ein Mikrocomputer verwendet. Der Mikrocomputer ist dann gemäss dem in der Fig. 11 dargestellten Flussdiagramm zu programmieren.

Dieses Flussdiagramm besteht in der angegebenen Reihenfolge aus der Kaskadenschaltung der Blöcke 26, 27, 28, 29, ..., 37. Die Blöcke 29, 33, 34 und 36 sind Entscheidungsblöcke mit je einem Ja-Ausgang Y (Yes) und je einem Nein-Ausgang N (No). Zur Bildung der Kaskadenschaltung werden nur die Ja-Ausgänge Y der Blöcke 29, 33, 34 und 36 verwendet, während die Nein-Ausgänge N der Blöcke 29, 33 und 36 miteinander verbunden und auf den Eingang eines Blockes 38 geführt sind. Der Nein-Ausgang N des Blockes 34 ist verbunden mit der Verbindung, die zwischen dem Block 29 und dem Block 30 besteht. Die Blöcke 26 bis 29 stellen den ersten Verfahrensschritt I, den sogenannten Erkennungsschritt dar, die Blöcke 30 und 31 stellen Löschschritte IIa und die Blöcke 32 bis 34 die dazugehörigen Kontrollschritte IIb dar. Die Blöcke 35 bis 38 stellen einen abschliessenden Freigabe- bzw. Sperrungsschritt III dar.

Der Block 26 stellt den Start des Auswertevorganges dar, der mit der Einführung eines Wertdokumentes 2' in die Auswerteeinrichtung beginnt. Gemäss Block 27 wird anschliessend der Zählwert z eines im Mikrocomputer enthaltenen Verfahrensschrittzählers auf Null zurückgestellt. Der erste Verfahrensschritt I erhält somit die Nummer "Null". Gemäss Block 28 wird anschliessend ein Codewort gelesen (R im Block 28 bedeutet: "Read") und gemäss Block 29 kontrolliert, ob es mit dem, dem Kunden und damit dem Auswertegerät zugeordneten vorgegebenen Codewort übereinstimmt. Der Buchstabe G im Block 29 bedeutet: "Stimmt das gelesene Codewort mit dem, dem Kunden vorgegebenen Codewort überein?" Lautet die Antwort "Nein", dann wird über den Nein-Ausgang N des Blockes 29 und den Block 38 die Auswerteeinrichtung gesperrt. Der Buchstabe H im Block 38 bedeutet: "Keine Akzeptierung des Wertdokumentes". Lautet die Antwort dagegen "Ja", dann ist der erste Verfahrensschritt I beendet und es beginnt der zweite Verfahrensschritt, der aus dem ersten Löschschritt und dem dazugehörigen Kontrollschritt besteht. Gemäss Block 30 wird jetzt zuerst der Zählwert z um Eins inkrementiert, so dass der zweite Verfahrensschritt die Nummer "Eins" erhält. Gemäss Block 31 werden anschliessend vorgegebene Bit des Codewortes gelöscht (E im Block 31 bedeutet: "Erase"), womit der erste Löschschritt beendet ist, und gemäss Block 32 anschliessend das teilweise gelöschte Codewort gelesen und gespeichert. Die Buchstaben R+S im Block 32 bedeuten "Read and store" und der Buchstabe J im Block 33 bedeutet: "Ist das teilweise gelöschte Codewort korrekt?". Lautet die Antwort auf diese Frage "Nein", dann wird über den Nein-Ausgang N des Blockes 33 und den Block 38 die Auswerteeinrichtung gesperrt. Lautet die Antwort dagegen "Ja", dann wird gemäss Block 34 die Frage gestellt: "Sind alle Bit des Codewortes gelöscht?", eine Frage, die im Block 34 durch den Buchstaben K dargestellt ist. Damit ist der zweite Verfahrensschritt beendet. Lautet die Antwort auf die Frage "Nein", dann werden über den Nein-Ausgang N des Blockes 34 noch einmal die Blöcke 30 bis 34 in Betrieb genommen, wobei dieser erneute Durchlauf dem dritten Verfahrensschritt entspricht, der aus dem zweiten Löschschritt und dem dazugehörigen Kontrollschritt besteht und der durch Inkrementierung des Zählwertes z die Nummer "Zwei" erhält. Die Blöcke 30 bis 34 werden immer wieder durchlaufen, bis die Frage des Blockes 34 mit einem "Ja" beantwortet wird. Jeder erneute Durchlauf der Blöcke 30 bis 34 stellt einen zusätzlichen Verfahrensschritt dar mit zusätzlichen Löschungen von Bitwerten des Codewortes. Lautet die Antwort auf die Frage des Blockes 34 "Ja", dann sind alle Bit des Codewortes gelöscht und die Freigabe kann erfolgen. Zuerst wird jedoch noch gemäss den Blöcken 35 und 36 ermittelt, ob die Reihenfolge der Löschungen einem vorgegebenen gültigen Bargeldwert entspricht. Der Buchstabe L im Block 35 bedeutet: "Decodiere die Reihenfolge der ganz und teilweise gelöschten Codewörter", und der Buchstabe M im Block 36 bedeutet: "Stimmt diese decodierte Reihenfolge mit einer vorgegebenen gültigen Reihenfolge überein?". Wird die letzte Frage mit "Nein" beantwortet, wird über den Nein-Ausgang N des Blockes 36 und den Block 38 die Auswerteeinrichtung gesperrt. Lautet die Antwort dagegen "Ja", dann wird über den Block 37 eine Dienstleistung freigegeben, die dem Bargeldwert entspricht, der seinerseits der vorgegebenen Reihenfolge der ganz und teilweise gelöschten Codewörter entspricht. Der Buchstabe Q im Block 37 bedeutet: "Akzeptiere den ermittelten Bargeldwert".

Durch das Vorhandensein der vielen, in feinen Stufen abgestuften Kontrollen ist nicht nur die Auswertung der Wertdokumente 2' sicherer gemacht, sondern auch deren Fälschungssicherheit verbessert worden, da ein gefälschtes Wertdokument 2', das noch ungehindert den ersten Verfahrensschritt durchläuft, mit grosser Wahrscheinlichkeit in einem der nachfolgenden Verfahrensschritte als Fälschung erkannt wird.

## Patentansprüche

1. Verfahren zum Auswerten und Löschen von Wertmarkierungen (3, 3', 3") auf Wertdokumenten (2, 2'), wobei eine Anzahl Wertmarkierungen ein Codewort bildet, das einen vorgegebenen Geldwert darstellt, wobei in einem ersten Verfahrensschritt (I) mit Hilfe einer ersten Decodierung (G) kontrolliert wird, ob vorgegebene Wertmarkierungen vorhanden und echt sind, und nachfolgende Verfahrensschritte (II, III) nur freigegeben werden, wenn dies der Fall ist, dadurch gekennzeichnet, dass nach der Freigabe dem ersten Verfahrensschritt (I) noch mindestens zwei zeitlich aufeinanderfolgende Löschschritte (IIa) als Verfahrensschritte folgen, während denen je ein Teil der vorgegebenen Wertmarkierungen gelöscht wird, bis nach dem letzten Löschschritt alle vorgegebenen Wertmarkierungen gelöscht sind, dass jedem Löschschritt je ein Kontrollschritt (IIb) zugeordnet wird, in dem mit Hilfe je einer weiteren Decodierung (J) kontrolliert wird, ob am Ende des zugehörigen Löschschrittes die gelöschten und die nichtgelöschten vorgegebenen Wertmarkierungen ein dem Löschschritt zugeordnetes, vorgegebenes weiteres Codewort bilden, wobei den nichtgelöschten Wertmarkierungen und den gelöschten Wertmarkierungen unterschiedliche Werte zugeordnet werden, und dass nach dem letzten Kontrollschritt ein Freigabesignal, das dem vorgegebenen Geldwert des ursprünglichen Codewortes entspricht, nur dann erzeugt wird, wenn nach allen Löschschritten in der richtigen Reihenfolge die vorgegebenen weiteren Codewörter vorhanden waren, wobei jedem Geldwert eine ganz bestimmte vorgegebene Reihenfolge von vorgegebenen weiteren Codewörtern entspricht.

2. Verfahren nach Anspruch 1, dadurch gekennzeichnet, dass der Teil der vorgegebenen Wertmarkierungen, der während eines Löschschrittes gelöscht wird, mitbestimmt wird durch Informationen, die auf dem Wertdokument (2') vorhanden sind.

3. Verfahren nach Anspruch 2, dadurch gekennzeichnet, dass räumliche Anordnung und Reihenfolge von Werkmarkierungen auf dem Wertdokument (2') die Informationen sind, die den Teil der vorgegebenen Wertmarkierungen mitbestimmen, der während eines Löschschrittes gelöscht wird.

4. Verfahren nach Anspruch 2, dadurch gekennzeichnet, dass Verbindungen zwischen Wertmarkierungen die Informationen auf dem Wertdokument (2') sind, die den Teil der vorgegebenen Wertmarkierungen mitbestimmen, der während eines Löschschrittes gelöscht wird.

5. Verfahren nach einem der Ansprüche 1 bis 4, dadurch gekennzeichnet, dass die Anzahl Wertmarkierungen des ursprünglichen Codewortes und die Anzahl ausgewerteter vorgegebener Wertmarkierungen gleich gross gewählt werden.

6. Verfahren nach einem der Ansprüche 1 bis 5, dadurch gekennzeichnet, dass in mindestens einem Löschschritt mindestens zwei Wertmarkierungen gelöscht werden.

7. Einrichtung zur Durchführung des Verfahrens nach einem der Ansprüche 1 bis 6, dadurch gekennzeichnet, dass die Einrichtung mindestens eine Kontroll- und Entscheidungseinheit (11) enthält zum zeitlichen Steuern der verschiedenen Verfahrensschritte, zur Entscheidungsfindung, ob die nach dem ersten Verfahrensschritt und nach jedem Löschschritt anstehenden Codewörter korrekt sind und ob ihre Reihenfolge einem vorgegebenen Geldwert entspricht, und zur Erzeugung mindestens eines Freigabesignals, falls dies der Fall ist.

8. Einrichtung nach Anspruch 7, dadurch gekennzeichnet, dass die Kontroll- und Entscheidungseinheit (11) ein Mikrocomputer ist.

9. Einrichtung nach Anspruch 7 oder 8, dadurch gekennzeichnet, dass die Einrichtung noch mindestens einen Lesekopf (16) und einen Löschkopf (18) enthält, dass ein erster Ausgang der Kontroll- und Entscheidungseinheit (11) mit mindestens einem Steuereingang des Lesekopfes (16) und ein zweiter Ausgang mit einem Steuereingang des Löschkopfes (18) verbunden sind und dass die Messausgänge des Lesekopfes (16) auf die Eingänge der Kontroll- und Entscheidungseinheit (11) geführt sind.

**Claims**

1. A process for the evaluation and erasure of value markings (3, 3', 3") on value documents (2, 2'), wherein a number of value markings forms a code word representing a predetermined money value, wherein in a first step (I) in the process, by means of a first decoding operation (G), a check is made to ascertain whether predetermined value markings are present and genuine and subsequent steps (II, III) in the process are enabled only if that is the case, characterised in that after the enabling operation the first step (I) in the process is also followed by at least two erasure steps (IIa) which take place in succession in respect of time, as steps in the process, during each of which erasure steps a respective portion of the predetermined value markings is erased until after the last erasure step all predetermined value markings are erased, that associated with each erasure step is a respective checking step (IIb) in which by means of a respective further decoding operation (J), a check is made to ascertain whether at the end of the associated erasure step the erased and non-erased predetermined value markings form a predetermined further code word associated with the erasure step, wherein different values are associated with the non-erased value markings and the erased value markings, and that after the last checking step an enable signal (Q) which corresponds to the predetermined money value of the original code word is produced only when after all erasure steps in the correct sequence the predetermined further code words were present, wherein a quite specific predetermined sequence of predetermined further code words corresponds to each money value.

2. A process according to claim 1 characterised in that the portion of the predetermined value markings which is erased during an erasure step is jointly determined by items of information which are present on the value document (2').

3. A process according to claim 2 characterised in that spatial arrangement and sequence of value markings on the value document (2') are the items of information which jointly define the portion of the predetermined value markings which is erased during an erasure step.

4. A process according to claim 2 characterised in that connections between value markings are the items of information on the value document (2') which jointly define the portion of the predetermined value markings which is erased during an erasure step.

5. A process according to one of claims 1 to 4 characterised in that the number of value markings of the original code word and the number of evaluated predetermined value markings are of equal magnitude.

6. A process according to one of claims 1 to 5 characterised in that at least two value markings are erased in at least one erasure step.

7. Apparatus for carrying out the process according to one of claims 1 to 6 characterised in that the apparatus includes at least one checking and deciding unit (11) for timing of the various steps in the process, for deciding whether the code words occurring after the first step in the process and after each erasure step are correct and whether the sequence thereof corresponds to a predetermined money value, and for producing at least one enable signal if that is the case.

8. Apparatus according to claim 7 characterised in that the checking and deciding unit (11) is a microcomputer.

9. Apparatus according to claim 7 or 8 characterised in that the apparatus also includes at least one reading head (16) and erasing head (18), that a first output of the checking and deciding unit (11) is connected to at least one control input of the reading head (16) and a second output is connected to a control input of the erasing head (18) and that the measurement outputs of the reading head (16) are taken to the inputs of the checking and deciding unit (11).

**Revendications**

1. Procédé pour évaluer et effacer des marques de valeurs (3, 3', 3") sur des documents de valeur (2, 2'), selon lequel, lors d'une première étape opératoire (I), on contrôle à l'aide d'un premier décodage (G) si des marques de valeurs prédéterminées existent et sont vraies, et des étapes opératoires ultérieures (II, III) ne sont autorisées que lorsque c'est le cas, caractérisé en ce qu'après l'autorisation, la première étape opératoire (I) est encore suivie par au moins deux étapes d'effacement (IIa), qui se succèdent dans le temps, en tant qu'étapes opératoires, pendant lesquelles respectivement une partie des marques de valeurs prédéterminées est effacée, jusqu'à ce qu'après la dernière étape d'effacement, toutes les valeurs de marque prédéterminées soient effacées, qu'à chaque étape d'effacement est associée respectivement une étape de contrôle (Ib), au cours de laquelle un contrôle est effectué à l'aide respectivement d'un autre décodage (J), pour savoir si à la fin de l'étape d'effacement associée, les marques de valeurs effacées et les marques de valeurs prédéterminées non effacées forment un autre mot de code prédéterminé, associé à l'étape d'effacement, des valeurs différentes étant associées aux marques de valeurs non effacées et aux marques de valeurs effacées, et qu'après la dernière étape de contrôle, le signal d'autorisation (Q), qui correspond à la valeur d'argent prédéterminée du mot de code initial, est produit uniquement lorsque les autres mots de code prédéterminés étaient présents après toutes les étapes d'effacement, selon la séquence correcte, chaque valeur d'argent correspondant à une suite prédéterminée parfaitement déterminée d'autres mots de code prédéterminés.

2. Procédé selon la revendication 1, caractérisé en ce que la partie des marques de valeurs prédéterminées, qui est effacée pendant une étape d'effacement, est déterminée simultanément par des informations qui sont présentes sur le document de valeur (2').

3. Procédé selon la revendication 2, caractérisé en ce que la disposition et la succession spatiales de marques de valeurs sur le document de valeur (2') sont des informations qui déterminent simultanément la partie des marques de valeurs prédéterminées, qui est effacée pendant une étape d'effacement.

4. Procédé selon la revendication 2, caractérisé en ce que des liaisons entre les marques de valeurs sont les informations situées sur le document de valeur (2'), qui déterminent simultanément la partie des marques de valeurs prédéterminées, qui est effacée pendant une étape d'effacement.

5. Procédé selon l'une des revendications 1 à 4, caractérisé en ce que le nombre des marques de valeurs du mot de code initial et le nombre des marques de valeurs prédéterminées évaluées sont choisis égaux.

6. Procédé selon l'une des revendications 1 à 5, caractérisé en ce qu'au moins deux marques de valeurs sont effacées pendant au moins une étape d'effacement.

7. Dispositif pour la mise en œuvre du procédé selon l'une des revendications 1 à 6, caractérisé en ce que le dispositif contient au moins une unité de contrôle et de décision (11), qui sert à commander les différentes étapes opératoires, à déterminer si les mots de code apparaissant après la première étape opératoire et après chaque étape d'effacement sont corrects et si leur succession correspond à une valeur d'argent prédéterminée, et pour produire au moins un signal d'autorisation, lorsque c'est le cas.

8. Dispositif selon la revendication 7, caractérisé en ce que l'unité de contrôle des décisions (11) est un micro-ordinateur.

9. Dispositif selon la revendication 7 ou 8, caractérisé en ce que le dispositif contient encore au moins une tête de lecture (16) et une tête d'effacement (18), qu'une première sortie de l'unité de contrôle et de décision (11) est reliée à au moins une entrée de commande de la tête de lecture (16) et qu'une seconde sortie est reliée à une entrée de commande de la tête d'effacement (18) et que les sorties de mesure de la tête de lecture (16) sont raccordées aux entrées de l'unité de contrôle et de décision (11).

Fig. 1

Fig. 2

Fig. 3

Fig. 4

Fig. 5

Fig. 6

EP 0 215 187 B1

Fig. 7

Fig. 8

Fig. 9

Fig. 10

# Fig. 11